# EUROPÄISCHE PATENTANMELDUNG

(11) **EP 4 622 044 A1**
(43) Veröffentlichungstag der Anmeldung: **24.09.2025**
(21) Anmeldenummer: 24165581.0
(22) Anmeldetag: 22.03.2024
(51) Int. Cl.: H02J 7/00, H01M 10/42, H01M 10/54

(54) **AKKUMULATOR-TIEFENTLADEVORRICHTUNG ZUM TIEFENTLADEN VON AKKUMULATOREN**

(71) Anmelder: Duesenfeld GmbH, 38176 Wendeburg (DE)
(72) Erfinder: BUSSMANN, Till, 30916 Isernhagen Ortsteil Altwarmbüchen (DE); FÖPPL, Tilman, 38114 Baraunschweig (DE)
(74) Vertreter: Gramm, Lins & Partner Patent- und Rechtsanwälte PartGmbB

(57) **Zusammenfassung**

Die Erfindung betrifft eine Akkumulator-Tiefentladevorrichtung (10) zum Entladen, insbesondere Tiefentladen, von Akkumulatoren (12), mit zumindest einem Akku-Anschluss (14), der einen Erstakkuanschluss-Pol (16.1) und einen zweiten Erstakkuanschluss-Pol (18.1) zum Anschließen eines Akkumulators (12) hat, einem Last-Anschluss (22) für eine Last zum Abführen einer elektrischen Leistung beim Entladen des zumindest einen Akkumulators (12), einer Entladeschaltung (20), mittels der der Akku-Anschluss (14) in einen Entladeschaltzustand, in dem der an den Akku-Anschluss (14) angeschlossene Akkumulator (12) mit dem Last-Anschluss (22) verbunden ist, und einen Warteschaltzustand, in dem der an den Akku-Anschluss (14) angeschlossene Akkumulator (12) nicht mit dem Last-Anschluss (22) verbunden ist und die Pole (16.1, 18.1) nicht kurzgeschlossen sind, schaltbar ist, wobei die Entladeschaltung (20) ausgebildet ist zum automatischen wiederholten Umschalten zwischen Entladeschaltzustand und Warteschaltzustand, sodass ein Entladestrom des Akkumulators reduzierbar ist.

## Beschreibung

Die Erfindung betrifft eine Akkumulator-Tiefentladevorrichtung zum Entladen, insbesondere Tiefentladen, von Akkumulatoren, mit (a) zumindest einem Akku-Anschluss, der einen Erstakkuanschluss-Pol und einen zweiten Erstakkuanschluss-Pol zum Anschließen eines Akkumulators hat, (b) einem Last-Anschluss für eine Last zum Abführen einer elektrischen Leistung beim Entladen des Akkumulators, (c) einer Entladeschaltung, mittels der der Akku-Anschluss (i) in einen Entlade513, in dem der an den Akku-Anschluss angeschlossenen Akkumulator mit dem Last-Anschluss verbunden ist, und (ii) einen Warteschaltzustand, in dem der an den Akku-Anschluss angeschlossene Akkumulator nicht mit dem Last-Anschluss verbunden ist und die Pole nicht kurzgeschlossen sind, schaltbar ist.

Aus der DE 10 2020 118 418 ist eine solche Vorrichtung verstanden, die dazu verwendet wird, Akkumulatoren vor dem Recyceln zu entladen.

Wünschenswert ist eine Akkumulator-Tiefentladevorrichtung, die eine möglichst hohe Produktivität besitzt, die also pro Zeiteinheit möglichst viele Akkumulatoren entladen kann. Es hat sich jedoch herausgestellt, dass ein zu schnelles Entladen der Akkumulatoren zu einem thermischen Durchgehen des Akkumulators führen kann. Bei einem thermischen Durchgehen erhitzt sich ein Teil des Akkumulators so stark, dass der Separator einer galvanischen Zelle des Akkumulators seine Funktion verliert, sodass es zu einer schnellen Reaktion der Bestandteile des jeweiligen galvanischen Elements kommt. Die dabei bewirkte Temperaturerhöhung führt zur Zerstörung weiterer galvanischen Zellen mit einer weiteren Temperaturerhöhung. Dass thermische Durchgehen ist damit eine unkontrollierte Kettenreaktion, die in der Regel zum Brand des Akkumulators führt.

Der Erfindung liegt die Aufgabe zugrunde, Nachteile im Stand der Technik zu vermindern, insbesondere die Produktivität der Akkumulator-Tiefentladevorrichtung ohne Einbußen bei der Sicherheit verbesserbar zu machen.

Die Erfindung löst das Problem durch eine gattungsgemäße Akkumulator-Tiefentladevorrichtung, bei der die Entladeschaltung ausgebildet ist zum wiederholten automatischen Umschalten zwischen Entladeschaltzustand und Warteschaltzustand sodass ein Entladestrom des Akkumulators reduzierbar ist, insbesondere sodass der Entladestrom des Akkumulators dauerhaft reduziert wird.

Vorteilhaft an der Erfindung ist, dass der Entladestrom, mit dem der am Last-Anschluss angeschlossene Akkumulator entladen wird, kontrolliert reduzierbar ist. Das ist insbesondere dann vorteilhaft, wenn eine Überhitzung des Akkumulators zu befürchten ist oder wenn die beim Entladen des zumindest einen Akkumulators freigesetzte elektrische Energie nicht sinnvoll abgeführt werden kann.

Vorteilhaft ist, dass auf diese Weise der Akkumulator in der Regel schonend entladen werden kann, sodass das sich bevorzugt anschließende weitere Recycling leichter und/oder effizienter und/oder sicherer durchgeführt werden kann.

Im Rahmen der vorliegenden Beschreibung wird unter einem Tiefentladen das Entladen auf eine Zellenspannung verstanden, bei der wegen des Entladens der Akkumulator geschädigt, insbesondere irreversibel geschädigt, wird. Insbesondere ist die Akkumulator-Tiefentladevorrichtung ausgebildet zum Entladen des Akkumulators auf eine Zellenspannung von höchstens einem Fünftel der Nennspannung, insbesondere höchstens einem Zehntel der Nennspannung. Beispielsweise ist die Akkumulator-Tiefentladevorrichtung ausgebildet zum Entladen des zumindest einen Akkumulators auf höchstens 1 V, insbesondere höchstens 0,5 V, beispielswiese höchstens 0,2 V, insbesondere höchstens 0, 1 V, beispielsweise 0 V.

Unter einer Akkumulator-Tiefentladevorrichtung wird insbesondere eine Vorrichtung verstanden, die dazu ausgebildet ist, einen Akkumulator tiefzuentladen. In anderen Worten existiert keine Vorrichtung zum Verhindern der Tiefentladung der Akkumulatoren.

Unter dem wiederholten automatischen Umschalten zwischen Entladeschaltzustand und Warteschaltzustand wird insbesondere verstanden, dass für einen Akkumulator zumindest zehnmal, insbesondere zumindest einhundermal, vom Entladeschaltzustand in den Warteschaltzustand und zurückgeschaltet wird. Insbesondere erfolgt das Umschalten vom Entladeschaltzustand in den Warteschaltzustand und zurück zum Reduzieren des Entladestroms.

Unter dem Merkmal, dass der Entladestrom des Akkumulators dauerhaft reduziert wird, wird insbesondere verstanden, dass der Entladestrom des Akkumulators durch das automatische Umschalten zwischen Entladeschaltzustand und Warteschaltzustand über zumindest eine Sekunde, insbesondere zumindest eine Minute, reduziert wird und zwar um zumindest 5%, insbesondere zumindest 10%, insbesondere zumindest 15%.

Unter dem Merkmal, dass die Entladeschaltung ausgebildet ist zum automatischen Umschalten zwischen Entladeschaltzustand und Warteschaltzustand mit der Schaltfrequenz wird insbesondere verstanden, dass die Entladeschaltung so an steuerbar ist, dass die Schaltfrequenz erreichbar ist. Es ist möglich, nicht aber notwendig, dass während des gesamten Entladevorgangs diese Schaltfrequenz erreicht oder überschritten wird. Insbesondere ist es ausreichend, wenn im Rahmen eines erfindungsgemäßen Verfahrens die Schaltfrequenz für zumindest 1 Sekunde, insbesondere zumindest 10 Sekunden, insbesondere zumindest 1 Minute, besonders bevorzugt zumindest 10 Minuten, erreicht oder überschritten wird.

Unter der Schaltfrequenz wird der Quotient aus der Zahl der Wechsel von Entladeschaltzustand zu Warteschaltzustand oder zurück als Zähler und der Zeiteinheit, innerhalb der diese Wechsel stattfinden, als Nenner, verstanden. Die Zeiteinheit ist beispielsweise 1 Sekunde. So ergeben 500 Wechsel vom Ladezustand in den Warteschaltzustand und 500 Wechsel vom Warteschaltzustand in den Entladeschaltzustand pro Sekunde eine Schaltfrequenz um 1 kHz. Es ist dabei möglich, nicht aber notwendig, dass das die Zeit zwischen einem Wechsel von Entladeschaltzustand zu Warteschaltzustand oder umgekehrt gleich ist.

Der Entladeschaltzustand kann auch dann realisiert sein, wenn kein Akku am Akku-Anschluss angeschlossen ist. Der Entladeschaltzustand bezieht sich auf den Zustand des Akku-Anschlusses, bei dem ein Akku entladen würde, wenn der Akku an den entsprechenden Akku-Anschluss angeschlossen wäre. Im Entladeschaltzustand gibt der angeschlossene Akkumulator elektrische Energie ab, die über den Last-Anschluss abgeführt wird.

Der Warteschaltzustand ist derjenige Zustand des Akku-Anschlusses, in dem ein an den Akku-Anschluss angeschlossene Akkumulator weder mit dem Last-Anschluss verbunden ist noch kurzgeschlossene Pole hat. Auch der Warteschaltzustand kann eingenommen werden, ohne dass ein Akkumulator an den Akku-Anschluss angeschlossen ist. Im Warteschaltzustand gibt der Akkumulator keine elektrische Energie ab.

Vorzugsweise besitzt die Entladeschaltung für jeden Akku-Anschluss ein erstes Schaltelement und ein zweites Schaltelement. Das erste Schaltelement ist vorzugsweise ein erster Halbleiterschalter, das ist aber nicht notwendig. Wenn im Folgenden vom ersten Halbleiterschalter gesprochen wird, ist stets ein Schaltelement ganz allgemein mitgemeint. Das zweite Schaltelement ist vorzugsweise ein zweiter Halbleiterschalter, das ist aber nicht notwendig. Wenn im Folgenden vom zweiten Halbleiterschalter gesprochen wird, ist stets ein Schaltelement ganz allgemein mitgemeint.

Die Schaltelemente sind vorzugsweise so verschaltet, dass der entsprechende Akku-Anschluss im Warteschaltzustand ist, wenn das zweite Schaltelement geöffnet ist.

Die Schaltelemente sind vorzugsweise so verschaltet, dass der entsprechende Akku-Anschluss im Kurzschlussschaltzustand ist, wenn beide Schaltelemente geschlossen sind.

Die Schaltelemente sind vorzugsweise so verschaltet, dass der entsprechende Akku-Anschluss im Energieentnahmezustand ist, wenn das zweite Schaltelemente geschlossen ist und das erste Schaltelement geöffnet ist.

Unter einem Akkumulator wird insbesondere eine galvanische Zelle oder eine Batterie, die aus mehreren galvanischen Zellen besteht, verstanden. Es ist möglich, dass die einzelnen galvanischen Zellen in einer Reihenschaltung miteinander verbunden sind. Alternativ oder zusätzlich sind zumindest einige der galvanischen Elemente parallelgeschaltet. Insbesondere ist die Akkumulator-Tiefentladevorrichtung für Akkumulatoren geeignet, in denen Gruppen von in Serie geschalteten galvanischen Elementen parallelgeschaltet sind. In anderen Worten kann der Akkumulator ein (Batterie-)Modul oder ein (Batterie-)System sein.

Günstig ist es, wenn die Akkumulator-Tiefentladevorrichtung zumindest 2, insbesondere zumindest 3, Akkuanschlüsse aufweist. In diesem Fall ist die Entladeschaltung ausgebildet, die Akku-Anschlüsse in den Entladeschaltzustand und den Warteschaltzustand zu schalten. Es ist möglich, dass die Akkumulator-Tiefentladevorrichtung mehr als zwei Anschlüsse aufweist, wobei ein oder mehrere Akku-Anschlüsse nicht in den Entladeschaltzustand und/oder den Warteschaltzustand schaltbar sind. Maßgeblich ist lediglich, dass zumindest ein, insbesondere zumindest zwei, vorzugsweise zumindest drei, Akkuanschlüsse wie angegeben in der Entladeschaltzustand und den Warteschaltzustand schaltbar sind.

Es ist vorteilhaft, wenn die Schaltfrequenz ein Vielfaches von 50 Hz oder 60 Hz ist, das ist aber nicht notwendig.

**Anspruch 2**: Vorzugsweise erfolgt das Umschalten mit einer vorgegebenen Schaltfrequenz. Beispielsweise beträgt die Schaltfrequenz zumindest 1 Hertz, insbesondere zumindest 10 Hertz, insbesondere zumindest 100 Hertz, insbesondere zumindest 1 kHz, insbesondere zumindest 10 kHz, besonders bevorzugt zumindest 100 kHz. Alternativ oder zusätzlich ist die Entladeschaltung ausgebildet zum automatischen kontinuierlichen Umschalten zwischen Entladeschaltzustand und Warteschaltzustand.

Gemäß einer bevorzugten Ausführungsform besitzt die Akkumulator-Tiefentladevorrichtung einen zweiten Akku-Anschluss zum Anschließen eines zweiten Akkumulators und zumindest einen dritten Akku-Anschluss zum Anschließen eines dritten Akkumulators. Vorzugsweise ist die Entladeschaltung so ausgebildet, dass für den zweiten und den dritten Akku-Anschluss, insbesondere für jeden Akku-Anschluss, der im Entladeschaltzustand ist, der an den Akku-Anschluss angeschlossene Akkumulator in einer Reihenschaltung mit den Akkumulatoren geschaltet ist, die an die anderen Akku-Anschlüsse im Entladeschaltzustand angeschlossen sind. Es sei jedoch darauf hingewiesen, dass die Akkumulatoren nicht Teil der Akkumulator-Entladevorrichtung sein müssen. In anderen Worten können mittels der Akkumulator-Tiefentladevorrichtung vorzugsweise zumindest 3 Akkumulatoren simultan entladen werden. Die Spannungen dieser Akkumulatoren addieren sich, da sie in eine Reihenschaltung geschaltet sind. Günstig ist es, wenn der Entladestrom für den zweiten Akku-Anschluss unabhängig vom ersten Akku-Anschluss reduzierbar ist. Auf diese Weise kann der Entladestrom für die angeschlossenen Akkumulatoren individuell reduziert und damit insbesondere optimiert werden. Günstig ist es, wenn der Entladestrom für den dritten Akku-Anschluss unabhängig vom ersten Akku-Anschluss und vom zweiten Akku-Anschluss reduzierbar ist.

Vorzugsweise ist die Entladeschaltung ausgebildet zum automatischen Durchführen eines Verfahrens mit den Schritten (a) Erfassen eines Warteschaltzustandszeitanteils, (b) Umschalten in den Warteschaltzustand, (c) Verbleiben im Warteschaltzustand für eine Warteschaltzustandsintervallzeit, (d) Umschalten aus dem Warteschaltzustand und (e) Verbleiben außerhalb des Warteschaltzustand für eine Entladeschaltzustandsintervallzeit, wobei (f) die Warteschaltzustandsintervallzeit und die Entladeschaltzustandsintervallzeit so gewählt sind, dass gemittelt über eine vorgegebene Mittelungszeit der Quotient aus dem Warteschaltzustandsintervallzeiten als Zähler und der Mittelungszeit als Nenner dem Warteschaltzustandszeitanteil entspricht. Der Warteschaltzustandszeitanteil könnte auch Soll-Warteschaltzustandszeitanteil genannt werden.

Das Erfassen des Warteschaltzustandszeitanteil kann auch ein Erfassen des (Soll-)Entladestroms und/oder des (Soll-) Warteschaltzustandszeitanteils sein.

Unter dem Erfassen des Warteschaltzustandszeitanteils wird insbesondere verstanden, dass der entsprechende Zahlenwert oder eine Codierung dieses Zahlenwerts von einer Recheneinheit ausgelesen oder empfangen wird oder von einer Eingabevorrichtung ausgelesen wird. Eine Eingabevorrichtung ist ein Gerät, in die ein Bediener einen Zahlenwert eingeben kann.

Beispielsweise kann ein Bediener mittels der Eingabevorrichtung den Warteschaltzustandszeitanteil heraufsetzen (und damit den Entladestrom herabsetzen), wenn zu befürchten ist, dass ein kleinerer Warteschaltzustandszeitanteil (und damit ein größerer Entladestrom) zu einer zu starken Erwärmung des entsprechenden Akkumulators führen würde. Zudem kann der Bediener den Warteschaltzustandszeitanteil in Abhängigkeit von der Kontaktierung des Akkumulators verändern. Ist beispielsweise ein Anschluss eines Akkumulators nur mittels einer Klemme möglich, sollte der Entladestrom nicht zu groß werden. Kann der Akkumulator hingegen über eine große Fläche kontaktiert werden, kann der Entladestrom groß gewählt werden und damit der Warteschaltzustandszeitanteil klein.

Der Warteschaltzustandszeitanteil wird vorzugsweise für jeden Akku-Anschluss gesondert erfasst. Es ist damit möglich, für jeden einzelnen Akkumulator gesondert festzulegen, mit welcher Geschwindigkeit er entladen wird. Der Warteschaltzustandszeitanteil liegt zwischen 0 (Entladung mit der maximalen Entlade-Geschwindigkeit) und 1 (keinerlei Entladung).

Vorzugsweise ist die Entladeschaltung ausgebildet zum automatischen Durchführen eines Verfahrens mit den Schritten (a) Erfassen eines Batteriezustandsparameters eines an einen Akku-Anschluss angeschlossenen Akkumulators und (b) Entladen mit einem Warteschaltzustandsanteil, der vom Batteriezustandsparameter abhängt.

Der Batteriezustandsparameter ist ein Parameter, der beschreibt, wie weit die Batterie gealtert ist oder in welchem Zustand die Batterie ist. Es ist möglich, dass der Batteriezustandsparameter über eine Eingabevorrichtung erfasst wird. Alternativ oder zusätzlich ist es möglich, dass der Batteriezustandsparameter von der Entladeschaltung gemessen wird.

Der Batteriezustandsparameter ist beispielsweise der Innenwiderstand, die Impedanz oder der Leitwert des Akkumulators, die Kapazität des Akkumulators relativ zu seiner Nenn-Kapazität, die Anzahl der Lade- und Entladezyklen, das Alter des Akkumulators und/oder die gesamte während der Lebenszeit des Akkumulators geladene und entladene elektrische Energie.

Der Ladezustand gemäß einer bevorzugten Ausführungsform ist die Entladeschaltung ausgebildet zum Messen des Batteriezustandsparameter, insbesondere des Innenwiderstands, der Impedanz oder des Leitwerts. Insbesondere ist die Entladeschaltung ausgebildet zum Anlegen einer Spannung mit zumindest zwei, insbesondere mehreren, Testfrequenzen und zum Erfassen der Impedanz des Akkumulators in Abhängigkeit von der Testfrequenz. Vorzugsweise ist die Entladeschaltung ausgebildet zum Berechnen des Batteriezustandsparameter aus den so gemessenen Impedanzen. Dazu besitzt die Entladeschaltung vorzugsweise einen digitalen Speicher, in dem die Abhängigkeit des Batteriezustandsparameter von den Impedanzen bei verschiedenen Testfrequenzen gespeichert ist.

Gemäß einer Ausführungsform besitzt die Akkumulator-Tiefentladevorrichtung zumindest einen Temperaturmesser zum Messen einer Akkumulator-Temperatur von Akkumulatoren, die an einen Akku-Anschluss angeschlossen sind. Es ist möglich, dass der Temperaturmesser die Temperatur von einem, zwei, drei oder mehreren Akkumulatoren gleichzeitig misst.

Vorzugsweise ist die Entladeschaltung ausgebildet zum automatischen Durchführen eines Verfahrens mit den Schritten (a) Erfassen der Akkumulator-Temperatur zumindest eines an einen Akku-Anschluss angeschlossen Akkumulators und (b) Entladen mit einem Warteschaltzustandszeitanteil, der von der Akkumulator-Temperatur abhängt. Beispielsweise wird der Warteschaltzustandszeitanteil gesenkt, wenn die Akkumulator-Temperatur einen vorgegebenen Temperatur-Schwellenwert überschreitet. Wie oben geschildert, ist das thermische Durchgehen von Akkumulatoren ein Risiko bei der Entladung. Je höher die Temperatur des Akkumulators, desto höher ist das Risiko eines thermischen Durchgehens. Durch das Überwachen der Temperatur des zumindest einen Akkumulators und des Anpassens des Warteschaltzustandszeitanteils an dessen Temperatur wird das Risiko des thermischen Durchgehens minimiert und/oder die Entladegeschwindigkeit optimiert.

Beispielsweise ist der Temperaturmesser ein Thermoelement. Es ist möglich, dass der Temperaturmesser an einem Spannmittel befestigt ist, dass zum Fixieren der Akkumulatoren relativ zur Akkumulator-Tiefentladevorrichtung verwendet wird.

Gemäß einer Ausführungsform ist der Temperaturmesser eine Thermokamera, die auch als IR-Kamera bezeichnet werden kann, und die so positioniert ist, dass zumindest ein, insbesondere zumindest zwei, besonders bevorzugt eine zumindest drei, Akkumulatoren, die an jeweils einem Akku-Anschluss angeschlossen sind, in einem Gesichtsfeld der Thermokamera liegen. Thermokameras haben den Vorteil, ortsaufgelöst messen zu können. Wenn daher bei einem räumlich großen Akkumulator ein galvanisches Element zu heiß wird, kann dies mittels einer Thermokamera erfasst werden, wohingegen ein beabstandet angeordneter Thermosensor diese Erwärmung nicht oder erst sehr spät erfassen würde.

Alternativ oder zusätzlich weist der Temperaturmesser zumindest einen Kontakt-Temperaturmesser zum thermischen Inkontaktbringen mit zumindest einem Akkumulator, der an einem Akku-Anschlussanschluss geschlossen ist, auf. Bei einem solchen Kontakt-Temperaturmesser kann es sich beispielsweise um ein Thermoelement handeln.

Vorzugsweise ist die Entladeschaltung ausgebildet zum automatischen Reduzieren des Entladestroms eines Akkumulators, der an einen Akku-Anschluss angeschlossen ist und für den der Temperaturmesser eine Akkumulator-Temperatur erfasst, die oberhalb einer Alarm-Temperatur liegt und/oder oberhalb einer Alarm-Temperaturänderungsgeschwindigkeit, in den Warteschaltzustand. Insbesondere wird der Entladestrom auf null reduziert.

In anderen Worten erfasst die Entladeschaltung für jeden Akku-Anschluss vom Temperaturmesser die Akkumulator-Temperatur eines Akkumulators, der an den jeweiligen Akku-Anschluss angeschlossen ist und vergleicht diese mit der vorgegebenen Alarm-Temperatur. Alternativ oder zusätzlich wird aus zwei oder mehr Temperaturmesswerten eine Temperaturänderungsgeschwindigkeit berechnet.

Wird die Alarm-Temperatur und/oder die Alarm-Temperaturänderungsgeschwindigkeit überschritten, ist die Gefahr des thermischen Durchgehens so groß, dass das Entladen des Akkumulators reduziert wird, indem der Entladestrom durch wiederholtes Umschalten zwischen Entladeschaltzustand und Warteschaltzustand reduziert wird, insbesondere dadurch unterbrochen wird, dass der Akku-Anschluss in den Warteschaltzustand geschaltet wird. Der an den Akku-Anschluss angeschlossene Akkumulator gibt dann keine elektrische Energie mehr ab.

Vorzugsweise ist jedem Akku-Anschluss ein Spannungsmesser zugeordnet. Auf diese Weise kann der Entladezustand des angeschlossenen Akkumulators jederzeit gemessen werden.

Vorzugsweise ist die Entladeschaltung so ausgebildet, dass jeder-Akkuanschluss in einen Kurzschlussschaltzustand schaltbar ist, in dem die beiden Pole kurzgeschlossen sind. Wenn die Akkumulatorspannung hinreichend klein ist, ist der im Akkumulator verbliebene Energieinhalt so klein, dass die Entnahme der verbliebenen elektrische Energie wirtschaftlich nicht mehr sinnvoll ist. Um den Akkumulator vollständig zu entladen, insbesondere um das Bedienungspersonal zu schützen, ist es vorteilhaft, die Pole des Akkumulators kurzschließen. Hierunter wird insbesondere verstanden, dass ein ohmscher Widerstand der Verbindung zwischen den Polen des Akkumulators kleiner ist als 5 Ohm, insbesondere kleiner als 1 Ohm. Im kurzgeschlossenen Zustand fließt zwar ein elektrischer Strom, aber kaum elektrische Leistung, da die Akkumulatorspannung klein ist.

Vorzugsweise ist die Entladeschaltung ausgebildet zum automatischen Durchführen eines Verfahrens mit den Schritten (i) für jeden Akku-Anschluss, an dem ein Akkumulator angeschlossen ist, Erfassen der Akku-Spannungen und (ii) Schalten des Akku-Anschlusses in den Kurzschlussschaltzustand, wenn die Akku-Spannung oder eine Zell-Spannung von galvanischen Zellen des Akkumulators, eine vorgegebene Minimal-Spannung nicht überschreitet. Auf diese Weise wird ein Akkumulator schnell vollständig entladen.

Die Zell-Spannung wird berechnet als Quotient aus der Akku-Spannung als Zähler und der Anzahl der in Serie geschalteten galvanischen Zellen des Akkus als Nenner. Die Anzahl der in Serie geschalteten galvanischen Zellen wird beispielswiese von einer Eingabevorrichtung ausgelesen. Die Eingabevorrichtung ist ausgebildet zum Erfassen einer Eingabe eines Bedieners, der die Anzahl der in Serie geschalteten galvanischen Zellen für jeden Akku-Anschluss eingeben kann. Diese Anzahl ist die Zahl der in Serie geschalteten galvanischen Zellen für den Akkumulator, der am Akku-Anschluss angeschlossen ist. Der Spannungsmesser ist Teil der Akkumulator-Tiefentladevorrichtung.

Die Minimal-Spannung ist vorzugsweise so gewählt, dass ein Kurzschlussstrom im Kurzschlussschaltzustand dem Entladestrom entspricht, der unmittelbar vor dem Umschalten in den Kurzschlusszustand, von dem an den Akku-Anschluss angeschlossenen Akkumulator abgegeben wurde. Unter dem Merkmal, dass der Kurzschlussstrom dem Entladestrom entspricht, wird insbesondere verstanden, dass die beiden Ströme gleich sein können, eine Abweichung von beispielsweise Faktor 2, vorzugsweise Faktor 1,5, ist aber möglich.

Vorzugsweise besitzt die Akkumulator-Tiefentladevorrichtung einen Strommesser, der ausgebildet ist zum Messen des Stroms für jeden Akku-Anschluss. Es ist möglich, dass die Akkumulator-Tiefentladevorrichtung für jeden Akku-Anschluss einen Strommesser aufweist. Es ist aber auch möglich, dass zumindest ein Strommesser zum Messen des Stromes an zwei oder mehr Akku-Anschlüssen verschaltet ist.

Vorzugsweise ist die Minimal-Spannung, wenn sie sich auf die Zell-Spannung bezieht, kleiner als die Entladeschlussspannung, insbesondere so klein, dass beim Erreichen der Minimal-Spannung der Akkumulator irreversibel geschädigt wird.

Die Entladeschlussspannung ist diejenige Spannung, unterhalb derer die Nenn-Kapazität 0% beträgt. Die Entladeschlussspannung ist vom Hersteller vorgegeben und für jeden Akkumulator bekannt. Vorzugsweise beträgt die Minimal-Spannung, wenn sie sich auf die Zell-Spannung bezieht, höchstens 2,5 V, insbesondere höchstens 1,5 V, insbesondere höchstens 1 V, insbesondere höchstens 0,5 V, insbesondere höchstens 0,2 V, beispielsweise höchstens 0,1 V. Der Freigabe-Kurzschlussstrom ist vorzugsweise kleiner als 120 A, insbesondere kleiner als 70 A und/oder größer als 1 A, insbesondere größer als 5 A.

Gemäß einer Ausführungsform ist die Entladeschaltung ausgebildet zum automatischen Ausgeben einer Freigabemeldung, wenn zumindest ein Akku-Anschluss im Kurzschlussschaltzustand ist und/oder ein Kurzschlussstrom höchstens einem vorgegebenen Freigabe-Kurzschlussstrom entspricht. Wenn der Akkumulator hinreichend weit entladen ist, kann er von der Akkumulator-Tiefentladevorrichtung dekontaktiert und entfernt werden, sodass ein neuer zu entladender Akkumulator an den entsprechenden Akku-Anschluss angeschlossen werden kann. Um diesen Folgen auszulösen, ist die Freigabemeldung vorteilhaft. Die Freigabemeldung kann eine vom Menschen wahrnehmbares, insbesondere akustische, optische oder anderwietige, beispielsweise haptische, Mitteilung sein und die Tatsache kodieren, dass der entsprechende Akkumulator von seinem Akku-Anschluss entfernt werden kann. Die Freigabemeldung kann aber auch, insbesondere ausschließlich, maschinenlesbar sein und beispielsweise ein, drahtgebundenes oder drahtloses, elektrisches oder optisches Signal sein.

Vorzugsweise wird die Freigabemeldung nur dann abgegeben, wenn eine Temperatur des entsprechenden Akkumulators unterhalb einer vorgegebenen Freigabe-Temperatur liegt.

Vorzugsweise besitzt die Entladeschaltung einen Prozessor, der bevorzugt einen digitalen Speicher aufweist kann.

Gemäß einer Ausführungsform ist die Entladeschaltung ausgebildet ist zum automatischen Durchführen eines Verfahrens mit den Schritten
(i) Erfassen, ob an einen Akku-Anschluss ein Akkumulator angeschlossen ist und
(ii) verneinendenfalls Unterdrücken des Schaltens des Akku-Anschlusses in den Entladeschaltzustand oder Schalten des Akku-Anschlusses in den Warteschaltzustand. Bejahendenfalls wird das Unterdrücken des Schaltens des Akku-Anschlusses in den Entladeschaltzustand nicht unterdrückt. In anderen Worten erfasst die Entladeschaltung, insbesondere der Prozessor, beispielsweise durch Erfassen, ob ein Stecker in den Akku-Anschluss eingesteckt ist, oder durch Messen des elektrischen Widerstands zwischen den Anschlusspolen des Akku-Anschlusses, ob ein Akkumulator angeschlossen ist. Ist das nicht der Fall, wird der Akku-Anschluss nicht in den Entladeschaltzustand geschaltet, auch wenn er in den Entladeschaltzustand geschaltet würde, wenn ein Akkumulator angeschlossen wäre. Auf diese Weise kann ein Akkumulator gefahrlos an den Akku-Anschluss angeschlossen werden.

Vorzugsweise umfasst die Akkumulator-Tiefentladevorrichtung eine Akku-Handhabungsvorrichtung, die ausgebildet ist zum automatischen Trennen eines Akkumulators vom Akku-Anschluss, an dem er angeschlossen ist, insbesondere wenn für den Akkumulator bzw. den Akku-Anschluss eine Freigabemeldung vorliegt. Die Akku-Handhabungsvorrichtung ist beispielsweise ein Roboter.

Vorzugsweise ist die Akku-Handhabungsvorrichtung ausgebildet zum Bewegen des Akkumulators vom Akku-Anschluss, an dem er vorher angeschlossen war, weg. Beispielsweise wird der Akkumulator in ein Lager oder zu einer Recyclingvorrichtung transportiert.

Vorzugsweise ist die Akku-Handhabungsvorrichtung ausgebildet zum automatischen Bewegen eines zu entladenden Akkumulators zu einem nicht belegten Akku-Anschluss. Akkumulatoren haben teilweise ein beträchtliches Gewicht, sodass es günstig ist, wenn das Transportieren des Akkumulators automatisch erfolgt.

Vorzugsweise ist die Akku-Handhabungsvorrichtung ausgebildet zum Anschließen des Akkumulators an den Akku-Anschluss oder alternativ zum Ausgeben einer Anschlussanforderungsmeldung, die kodiert, dass dieser Akkumulator, insbesondere von einem Bediener, an den Akku-Anschluss angeschlossen werden muss.

Gemäß einer Ausführungsform umfasst die Akkumulator-Tiefentladevorrichtung einen Strommesser zum Erfassen des elektrischen Stroms, der durch die Reihenschaltung fließt. Dieser Strommesser ist alternativ oder zusätzlich zum zumindest einen Strommesser zum Messen des Stroms, der durch zumindest einen Akku-Anschluss fließt, vorhanden.

Vorzugsweise ist die Entladeschaltung ausgebildet, um für zumindest einen Akku-Anschluss, insbesondere für eine Mehrzahl der Akku-Anschlüsse, insbesondere für alle Akku-Anschlüsse, automatisch einen Soll-Entladestrom für den jeweiligen Akku-Anschluss zu erfassen. Das erfolgt beispielsweise durch Bestimmen des Batteriezustandsparameter, insbesondere der Akkumulator-Temperatur, und durch Auslesen einer Datenbank, in Batteriezustandsparametern ist jeweils ein Soll-Entladestrom zugeordnet. Alternativ erfolgt das Erfassen des Soll-Entladestroms über eine Eingabevorrichtung, in die ein Benutzer den entsprechenden Soll-Entladestrom und/oder den Batteriezustandsparameter einträgt.

Günstig ist es, wenn die Entladeschaltung ausgebildet ist zum Umschalten zwischen Entladeschaltzustand und Warteschaltzustand mit einer Schaltfrequenz, die so gewählt ist, dass ein zeitlich gemittelter Ist-Entladestrom den Soll-Entladestrom entspricht. Der gemittelte Ist-Entladestrom wird über eine vorgegebene Mittelungszeit gemittelt. Diese ist grundsätzlich frei wählbar, beträgt aber vorzugsweise zumindest 1 Sekunde und/höchstens 10 Minuten. Auf diese Weise wird der Akkumulator mit dem für ihn optimalen Entladestrom entladen.

Vorzugsweise besitzt die Akkumulator-Tiefentladevorrichtung die oben erwähnte Eingabevorrichtung zum Eingeben des Soll-Entladestroms und/oder des Batteriezustandsparameter für zumindest einen Akkuanschluss, insbesondere für zumindest eine Gruppe von Akku-Anschlüssen.

Zum schnellen Umschalten besitzt die Entladeschaltung vorzugsweise einen Halbleiterschalter, insbesondere einen Bipolartransistor mit isolierter Gate-Elektrode und/oder einen MOSFET, zum Schalten in den Entladeschaltzustand oder den Warteschaltzustand.

Vorzugsweise ist die Entladeschaltung ausgebildet zum automatischen Durchführen eines Verfahrens mit den Schritten (a) Erfassen einer Soll-Leistungsabgabe der Akkumulator-Tiefentladevorrichtung und (b) wenn eine Ist-Leistungsabgabe größer ist als die Soll-Leistungsabgabe, Erhöhen des Warteschaltzustandszeitanteils für zumindest einen Akku-Anschluss. Ein Vorteil der Akkumulator-Tiefentladevorrichtung ist, dass diese die in den zu entladenden Akkumulatoren gespeicherte elektrische Energie sinnvoll nutzbar macht. Wenn gespeicherte Energie nicht nutzbar einsetzbar ist, kann die Leistungsabgabe der Akkumulator-Entladevorrichtung gedrosselt werden, indem der Warteschaltzustandszeitanteil zumindest eines Akku-Anschlusses erhöht wird.

Vorzugsweise besitzt die Akkumulator-Tiefentladevorrichtung einen Wechselrichter zum Abgeben von Wechselspannung einer vorgegebenen Frequenz und Spannung und/oder einen Gleichstrom-Gleichstrom-Spannungswandler zum Abgeben einer Gleichspannung vorgegebene Spannung. Auf diese Weise kann die elektrische Energie aus den Akkumulatoren sinnvoll verwertet werden.

Erfindungsgemäß ist zudem ein Verfahren zum Entladen, insbesondere Tiefentladen, von Akkumulatoren, mit den Schritten (i) Anschließen eines Akkumulators an einen Akku-Anschluss einer Akkumulator-Entladevorrichtung nach einem der vorstehenden Ansprüche und (ii) Entladen des Akkumulators und Unterbrechen der Entladung des Akkumulators, wobei zwischen dem Entladen und dem Nicht-Entladen zumindest zeitweise mit einer Schaltfrequenz von zumindest 1 Kilohertz gewechselt wird. Vorzugsweise kann die Entladeschaltung die Akku-Anschlüsse somit entweder in den Entladeschaltzustand oder den Warteschaltzustand schalten. Im Warteschaltzustand gibt der angeschlossene Akkumulator keine elektrische Energie ab. Im Entladeschaltzustand gibt der angeschlossene Akkumulator elektrische Energie ab.

Der Entladeschaltzustand ist entweder der Kurzschlussschaltzustand, in dem die Pole des Akkumulators kurzgeschlossen sind, oder ein Energieentnahmezustand, in dem der Akkumulator elektrische Energie an den Last-Anschluss abgibt. Die Entladeschaltung kann die Akku-Anschlüsse vorzugsweise in alle drei Schaltzustände (Kurzschlussschaltzustand, Energieentnahmezustand, Warteschaltzustand) schalten.

Das Verfahren ist vorzugsweise ein Teil eines Recyclingverfahrens für Akkumulatoren. Das Ziel des Verfahrens ist es insbesondere, den Energieinhalt des Akkumulators zumindest weitgehend zu minimieren. Dadurch werden die nachfolgenden Recyclingschritte erleichtert.

Im Folgenden wird die Erfindung anhand der beigefügten Zeichnungen näher erläutert. Dabei zeigt
- Figur 1: ein schematisches Schaltbild einer erfindungsgemäßen Akkumulator-Tiefentladevorrichtung,
- Figur 2: die Akkumulator-Tiefentladevorrichtung gemäß Figur 1, bei der zwei Akku-Anschlüsse im Entladeschaltzustand sind, ein Akku-Anschluss im Warteschaltzustand ist und ein Akku-Anschluss im Kurzschlussschaltzustand ist.

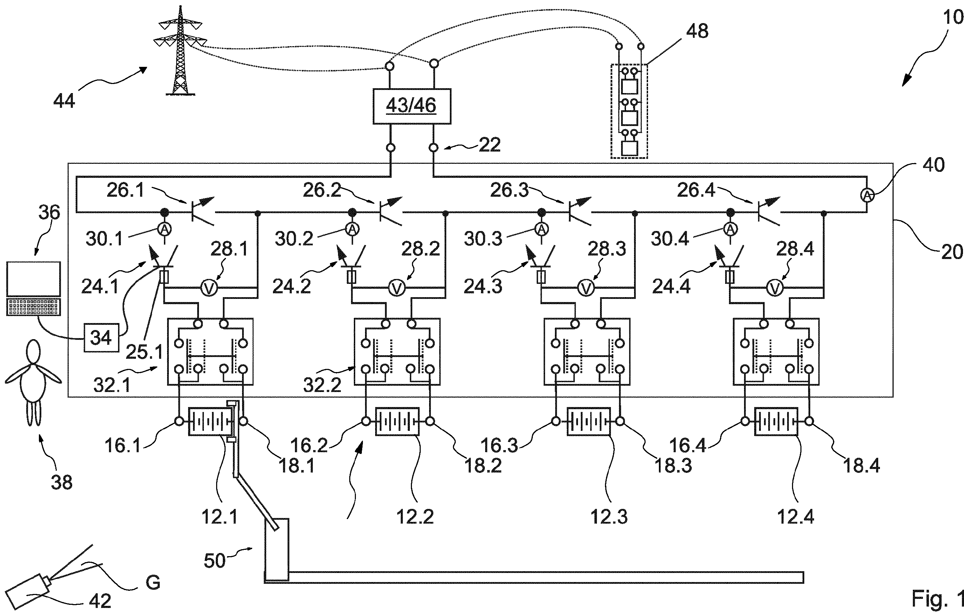

Figur 1 zeigt eine erfindungsgemäße Akkumulator-Tiefentladevorrichtung 10 zum Entladen von Akkumulatoren 12.i (i = 1, 2,... ), mit einem ersten Akku-Anschluss 14.1. In Figur 1 sind mehrere Akku-Anschlüsse 14.j (j = 1, 2, ... J; hier J = 4) eingezeichnet, wobei jedoch nur ein Akku-Anschluss 14.1 notwendig ist. Der erste Akku-Anschluss 14.1 besitzt einen ersten Pol 16.1, der erster Erstakkuanschluss-Pol genannt wird, und einen zweiten Pol 18.1, der zweiter Erstakkuanschluss-Pol genannt wird. Entsprechend besitzt der zweite Akku-Anschluss 14.2 einen ersten Pol 16.2, der erster Zweitakkuanschluss-Pol genannt wird, und einen zweiten Pol 18.2, der zweiter Zweitakkuanschluss-Pol genannt wird. Am ersten Akku-Anschluss 14.1 ist der erste Akkumulator 12.1 angeschlossen.

Die Akkumulator-Tiefentladevorrichtung 10 besitzt eine Entladeschaltung 20, die einen Last-Anschluss 22 aufweist. Die Entladeschaltung 20 kann für den ersten Akku-Anschluss einen ersten Halbleiterschalter 24.1, einen zweiten Halbleiterschalter 26.1, einen Spannungsmesser 28.1 und/oder einen Strommesser 30.1 besitzen.

Es ist möglich, dass der Spannungsmesser 28.1 so verschaltet ist, dass er sukzessiv auch die Spannung messen kann, die an einem weiteren oder weiteren Akku-Anschlüssen 14.2, 14.3, ... anliegen, sofern die Akkumulator-Tiefentladevorrichtung 10 diese aufweist, was möglich, aber nicht notwendig ist. Der Einfachheit halber ist in Figur 1 für jeden Akku-Anschluss 14.j ein entsprechender Spannungsmesser 28. i eingezeichnet. Ebenso ist es möglich, dass der Strommesser 30.1 so verschaltet ist, dass er sukzessiv auch den Strom messen kann, der durch einen weiteren oder mehrere weitere Akku-Anschlüsse 14.2, 14.3, ... fließt, sofern die Akkumulator-Tiefentladevorrichtung 10 diese besitzt.

Figur 1 zeigt, dass die Akkumulator-Tiefentladevorrichtung 10 für jeden Akku-Anschluss 14.j eine Verpolungsschutzschaltung 32.j besitzen kann, nicht aber muss. Ist der jeweilige Akkumulator 12.i polfalsch an seinem Akku-Anschluss 14.j angeschlossen, so wird dies von der Verpolungsschutzschaltung 32.j detektiert und die Polung geändert.

Die Akkumulator-Tiefentladevorrichtung 10kann einen Prozessor 34 besitzen, der mit den Halbleiterschalter 24.j, 26.j verbunden ist und diese zum Schließen und/oder Öffnen ansteuern kann. Der Prozessor kann zudem mit einer Eingabevorrichtung 36 verbunden sein, über die ein Benutzer 38 Daten eingeben kann, beispielsweise einen Soll-Entladestrom I_{soll,j} oder einen Batteriezustandsparameter Pⱼ für jeden zumindest einen Akku-Anschluss 12.j.

Zwischen dem ersten Halbleiterschalter 24.j und dem zugehörigen Akku-Anschluss 14.j kann eine Sicherung 25.j angeordnet sein.

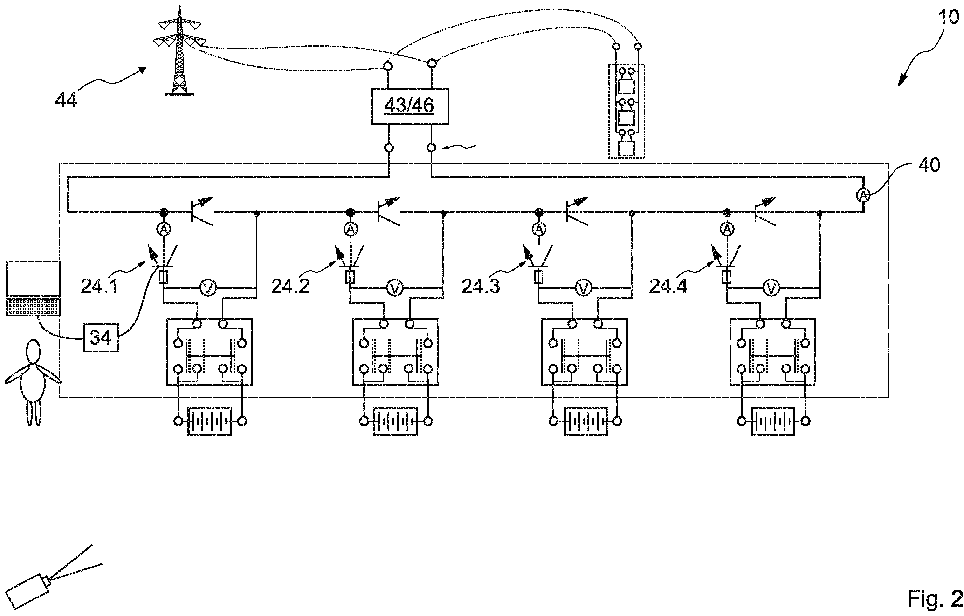

Figur 2 zeigt schematisch den Zustand, in dem der erste Halbleiterschalter 24.1 geschlossen ist, wohingegen der zweite Halbleiterschalter 26.1 geöffnet ist. In diesem Fall ist der Akkumulator 12.1 mit dem Last-Anschluss 22 verbunden. Wird am Last-Anschluss 22 elektrische Leistung abgegriffen, so trägt der Akkumulator 12.1 zu dieser Leistung bei. Der Akku-Anschluss 14.1 ist damit im Energieentnahmezustand.

Der erste Halbleiterschalter 24.2 des zweiten Akku-Anschlusses 14.2 ist ebenfalls geschlossen, der zweite Halbleiterschalter 26.2 des zweiten Akku-Anschlusses 14.2 ist ebenfalls geöffnet. Damit sind die Akkumulatoren 12.1 und 12.2 in eine Reihenschaltung geschaltet.

Der erste Halbleiterschalter 24.3 des dritten Akku-Anschlusses 12.3 ist geöffnet, der zweite Halbleiterschalter 26.3 des dritten Akku-Anschlusses 12.3 ist geschlossen. Der dritte Akku-Anschluss 12.3 ist damit im Warteschaltzustand.

Der erste Halbleiterschalter 24.4 des vierten Akku-Anschlusses 12.4 und der zweite Halbleiterschalter 26.3 des vierten Akku-Anschlusses 12.4 sind geschlossen. Der Akkumulator 12.4 ist dadurch kurzgeschlossen. Der dritte Akku-Anschluss 12.3 ist damit im Kurzschlussschaltzustand.

In Abhängigkeit von einer Akku-Spannung U_{12.1}, die an den Polen des Akkumulators 12.1 anliegt, sowie der Leistungsentnahme am Last-Anschluss 22 ergibt sich ein Entladestrom I_{12.1}, den der Akkumulator 12.1 abgibt. Dieser Entladestrom entspricht einem Gesamt-Entladestrom I_{ges}, der durch die gesamte Reihenschaltung fließt. Zum Messen dieses Gesamt-Entladestroms I_{ges} kann ein Gesamt-Strommesser 40 vorhanden sein.

Ist der Entladestrom, den der Akkumulator 12.1 abgibt, größer als der Soll-Entladestrom I_{soll,12.1}, der beispielsweise von der Eingabevorrichtung 36 erfasst wurde, kann der Prozessor 34 die Halbleiterschalter 24.1, 26.1 so ansteuern, dass diese zwischen dem Entladeschaltzustand und dem Warteschaltzustand hin- und herschalten. Die Wechsel zwischen Entladeschaltzustand und Warteschaltzustand entsprechen einer Schaltfrequenz f. Je größer der Anteil der Zeit, in dem der Akku-Anschluss 14.1 im Entladeschaltzustand ist, desto größer ist der mittlere Entladestrom Iᵢₛₜ. Der mittlere Entladestrom wird beispielsweise über eine Mittelungszeit τ von beispielsweise τ = 1 Sekunde gemittelt. In anderen Worten werden die Halbleiterschalter 24.1, 26.1 pulsweitengesteuert.

Um durch das Hin- und Herschalten möglichst wenig Spannungs- und Stromfluktuationen zu bewirken, kann die Schaltfrequenz f = 1 kHz oder mehr betragen. Bevorzugt sind Schaltfrequenz oberhalb von 100 kHz, insbesondere oberhalb von 1 MHz.

Figur 1 zeigt, dass die Akkumulator-Tiefentladevorrichtung 10 einen Temperaturmesser 42, beispielsweise in Form einer Thermokamera aufweisen kann. Im Gesichtsfeld G der Thermokamera liegen die Akkumulatoren 12.j. Der Temperaturmesser 42 erfasst die Temperaturen T_{12.j} der am jeweiligen Akku-Anschluss 14.j angeschlossen Akkumulatoren und übermittelt diese an die Entladeschaltung 20, insbesondere den Prozessor 34. Überschreitet eine der Temperaturen T_{12.j} eine vorgegebene Alarm-Temperatur T_{Alarm}, so wird von der Entladeschaltung 20 der Warteschaltzustandszeitanteil Aw für denjenigen Akku-Anschluss 14.j reduziert, an dem der Akkumulator 12.j angeschlossen ist, dessen Temperatur zu hoch ist. Dadurch sinkt der Entladestrom I_{12.j} des Akkumulators 12.j und die Temperatur fällt ab.

Es ist zudem möglich, dass die Temperaturen T_{12.j} kontinuierlich gemessen werden und daraus anhand einer digital gespeicherten Tabelle der geeignete Entladestrom I_{12.j} ermittelt und von der Entladeschaltung 20 eingestellt wird.

Es ist zudem möglich, dass der Bediener 38 über die Eingabevorrichtung 36 den jeweiligen Batteriezustandsparameter Pⱼ für den Akkumulator, der am Akku-Anschluss 14.j angeschlossen ist, eingibt.

Figur 1 zeigt, dass am Last-Anschluss 22 ein Wechselrichter 42 angeschlossen sein kann. Dieser Wechselrichter kann beispielsweise mit einem öffentlichen Stromnetz 44 in Verbindung stehen. Alternativ oder zusätzlich kann der Last-Anschluss mit einem Gleichstrom-Gleichstrom-Spannungswandler 46 verbunden sein, der einen Batteriepuffer 48 oder ein Gleichspannungsverbraucher mit elektrischer Energie versorgt.

Erfasst einen Spannungsmesser 28.j, dass die Akku-Spannung U_{12.j} eines der Akkumulatoren 12.j unter eine Minimal-Spannung gefallen ist, die einer Zell-Spannung von beispielsweise 0,2 V entspricht, wird der entsprechende Akkumulator 12.j kurzgeschlossen. Fällt der resultierende Kurzschlussstrom I_{KS,12.j} unter einen vorgegebenen Freigabe-Kurzschlussstrom I_{KS,FC}, so gibt beispielsweise der Prozessor 34 eine Freigabemeldung ab, die beispielsweise optisch oder akustisch wahrnehmbar ist.

Alternativ ist die Freigabemeldung maschinenverständlich und ein optionaler Roboter 50 trennt auf die Freigabemeldung hin den Akkumulator 12.j von der Akkumulator-Tiefentladevorrichtung 10.

### Bezugszeichenliste

| | | | |
|---|---|---|---|
| 10 | Akkumulator-Tiefentladevorrich- tung | 40 | Gesamt-Strommesser |
| | | 42 | Temperaturmesser |
| 12 | Akkumulator | 43 | Wechselrichter |
| 14 | Akku-Anschluss | 44 | Stromnetz |
| 16 | erster Pol | 46 | Gleichstrom-Gleichstrom-Spannungswandler |
| 18 | zweiter Pol | | |
| | | 48 | Batteriepuffer |
| 20 | Entladeschaltung | | |
| 22 | Last-Anschluss | 50 | Roboter |
| 24 | erste Halbleiterschalter | | |
| 25 | Sicherung | τ | Mittelungszeit |
| 26 | zweite Halbleiterschalter | f | Schaltfrequenz |
| 28 | Spannungsmesser | G | Gesichtsfeld |
| | | i | Laufindex (Akkumulator) |
| 30 | Strommesser | Iₛₒₗₗ | Soll-Entladestrom |
| 32 | Verpolungsschutzschaltung | I_{KS} | Kurzschlussstrom |
| 34 | Prozessor | j | Laufindex (Akku-Anschluss) |
| 36 | Eingabevorrichtung | J | Zahl der Akku-Anschlüsse |
| 38 | Benutzer | Pⱼ | Batteriezustandsparameter |

## Patentansprüche

1. Akkumulator-Tiefentladevorrichtung (10) zum Entladen, insbesondere Tiefentladen, von Akkumulatoren (12), mit
(a) zumindest einem Akku-Anschluss (14),
der einen Erstakkuanschluss-Pol (16.1) und einen zweiten Erstakkuanschluss-Pol (18.1) zum Anschließen eines Akkumulators (12) hat,
(b) einem Last-Anschluss (22) für eine Last zum Abführen einer elektrischen Leistung beim Entladen des zumindest einen Akkumulators (12),
(c) einer Entladeschaltung (20), mittels der der Akku-Anschluss (14)
(i) in einen Entladeschaltzustand, in dem der an den Akku-Anschluss (14) angeschlossene Akkumulator (12) mit dem Last-Anschluss (22) verbunden ist, und
(ii) einen Warteschaltzustand, in dem der an den Akku-Anschluss (14) angeschlossene Akkumulator (12) nicht mit dem Last-Anschluss (22) verbunden ist und die Pole (16.1, 18.1) nicht kurzgeschlossen sind, schaltbar ist,
**dadurch gekennzeichnet, dass**
(d) die Entladeschaltung (20) ausgebildet ist zum automatischen wiederholten Umschalten zwischen Entladeschaltzustand und Warteschaltzustand, sodass ein Entladestrom des Akkumulators reduzierbar ist.

2. Akkumulator-Tiefentladevorrichtung (10) nach Anspruch 1, **dadurch gekennzeichnet, dass** das Umschalten mit einer vorgegebenen Schaltfrequenz erfolgt, die zumindest 9 Hertz beträgt.

3. Akkumulator-Tiefentladevorrichtung (10) nach einem der vorstehenden Ansprüche, mit
(a) einem zweiten Akku-Anschluss (14) zum Anschließen eines zweiten Akkumulators (12) und
(b) zumindest einem dritten Akku-Anschluss (14) zum Anschließen eines dritten Akkumulators (12),
(c) wobei die Entladeschaltung (20) so ausgebildet ist, dass für jeden Akku-Anschluss (14) in seinem Entladeschaltzustand der an den Akku-Anschluss (14) angeschlossene Akkumulator (12) in einer Reihenschaltung mit den Akkumulatoren (12) ist, die an die anderen Akku-Anschlüsse (14.j) im Entladeschaltzustand angeschlossen sind.

4. Akkumulator-Tiefentladevorrichtung (10) nach Anspruch 1, **dadurch gekennzeichnet, dass** die Entladeschaltung (20) ausgebildet ist zum automatischen Durchführen eines Verfahrens mit den Schritten
(a) Erfassen eines Warteschaltzustandszeitanteils,
(b) Umschalten in den Warteschaltzustand,
(c) Verbleiben im Warteschaltzustand für eine Warteschaltzustandsintervallzeit,
(d) Umschalten aus dem Warteschaltzustand und
(e) Verbleiben außerhalb des Warteschaltzustand für eine Entladeschaltzustandsintervallzeit,
(f) wobei die Warteschaltzustandsintervallzeit und die Entladeschaltzustandsintervallzeit so gewählt sind, dass gemittelt über eine vorgegebene Mittelungszeit (τ) der Quotient aus den Warteschaltzustandsintervallzeiten als Zähler und der Mittelungszeit (τ) als Nenner dem Warteschaltzustandszeitanteil entspricht.

5. Akkumulator-Tiefentladevorrichtung (10) nach einem der vorstehenden Ansprüche, **dadurch gekennzeichnet, dass** die Entladeschaltung (20) ausgebildet ist zum automatischen Durchführen eines Verfahrens mit den Schritten
(a) Erfassen eines Batteriezustandsparameters (Pⱼ) eines an einen Akku-Anschluss (14) angeschlossenen Akkumulators (12) und
(b) Entladen mit einem Warteschaltzustandszeitanteil, der vom Batteriezustandsparameter (Pⱼ) abhängt.

6. Akkumulator-Tiefentladevorrichtung (10) nach einem der vorstehenden Ansprüche, **gekennzeichnet durch**
(i) zumindest einen Temperaturmesser (42) zum Messen einer Akkumulator-Temperatur von Akkumulatoren (12), die an einen Akku-Anschluss (14) angeschlossen sind,
(ii) wobei die Entladeschaltung (20) ausgebildet ist zum automatischen Durchführen eines Verfahrens mit den Schritten
(a) Erfassen der Akkumulator-Temperatur zumindest eines an einen Akku-Anschluss (14) angeschlossen Akkumulators (12) und
(b) Entladen mit einem Warteschaltzustandszeitanteil, der von der Akkumulator-Temperatur abhängt.

7. Akkumulator-Tiefentladevorrichtung (10) nach Anspruch 6, **dadurch gekennzeichnet, dass** der Temperaturmesser (42)
(a) eine Thermokamera ist, die so positioniert ist, dass zumindest ein, insbesondere zumindest zwei, Akkumulatoren (12), die an jeweils einem Akku-Anschluss (14) angeschlossen sind, in einem Gesichtsfeld (G) der Thermokamera liegen und/oder
(b) zumindest einen Kontakt-Temperaturmesser (42) zum thermischen Inkontaktbringen mit zumindest einem Akkumulator (12), der an einem Akku-Anschluss (14) angeschlossen ist, aufweist.

8. Akkumulator-Tiefentladevorrichtung (10) nach Anspruch 6 oder 7, **dadurch gekennzeichnet, dass** die Entladeschaltung (20) ausgebildet ist zum automatischen Schalten eines Akku-Anschlusses (14) in den Warteschaltzustand, wenn für einen Akkumulator (12), der an einen Akku-Anschluss (14) angeschlossen ist, der Temperaturmesser (42) eine Akkumulator-Temperatur erfasst, die oberhalb einer Alarm-Temperatur liegt,.

9. Akkumulator-Tiefentladevorrichtung (10) nach einem der vorstehenden Ansprüche, **dadurch gekennzeichnet, dass**
(a) jedem Akku-Anschluss (14) ein Spannungsmesser (28) zugeordnet ist,
(b) die Entladeschaltung (20) so ausgebildet ist, dass jeder Akku-Anschluss (14) in einen Kurzschlussschaltzustand schaltbar ist, in dem die beiden Pole (16.1, 18.1) kurzgeschlossen sind und
(c) die Entladeschaltung (20) ausgebildet ist zum automatischen Durchführen eines Verfahrens mit den Schritten
(i) für jeden Akku-Anschluss (14), an dem ein Akkumulator (12) angeschlossen ist, Erfassen einer Akku-Spannung und
(ii) Schalten des Akku-Anschlusses (14) in den Kurzschlussschaltzustand, wenn die Akku-Spannung oder eine Zell-Spannung von galvanischen Zellen des Akkumulators (12), eine vorgegebene Minimal-Spannung nicht überschreitet.

10. Akkumulator-Tiefentladevorrichtung (10) nach einem der vorstehenden Ansprüche, **dadurch gekennzeichnet, dass**
die Entladeschaltung ausgebildet ist zum automatischen Durchführen eines Verfahrens mit den Schritten
(i) Erfassen, ob an einen Akku-Anschluss (14) ein Akkumulator angeschlossen ist und
(ii) verneinendenfalls Unterdrücken des Schaltens des Akku-Anschlusses (14) in den Entladeschaltzustand oder Schalten des Akku-Anschlusses (14) aus dem Entladeschaltzustand.

11. Akkumulator-Tiefentladevorrichtung (10) nach einem der Ansprüche 6 bis 9,
**gekennzeichnet durch**
eine Akku-Handhabungsvorrichtung, die ausgebildet ist zum automatischen
(i) Trennen eines Akkumulators (12) vom Akku-Anschluss (14), an dem er angeschlossen ist,
(ii) Bewegen des Akkumulators (12) vom Akku-Anschluss (14) weg,
(iii) ggf. Bewegen eines zu entladenden Akkumulators (12) zum Akku-Anschluss (14) und
(iv) Anschließen dieses Akkumulators (12) oder Ausgeben einer Anschlussanforderungsmeldung, die kodiert, dass dieser Akkumulator (12) an den Akku-Anschluss (14) angeschlossen werden muss.

12. Akkumulator-Tiefentladevorrichtung (10) nach einem der vorstehenden Ansprüche, **gekennzeichnet durch**
(a) einen Strommesser (30) zum Erfassen eines elektrischen Stroms, der durch die Reihenschaltung fließt, und/oder
zumindest einen Strommesser (30) für zumindest einen Akku-Anschluss (14), der verschaltet ist zum Messen eines Kurzschlussstroms (I_{KS}), wenn der Akku-Anschluss (14) im Kurzschlussschaltzustand ist,
(b) wobei die Entladeschaltung (20) ausgebildet ist zum automatischen Erfassen eines Soll-Entladestroms (I_{Soll}) für einen an den Akku-Anschluss (14) angeschlossenen Akkumulator (12), insbesondere anhand von dessen Akkumulator-Temperatur und/oder dessen Batteriezustandsparameters (Pⱼ), für zumindest einen Akku-Anschluss (14) und
(c) Umschalten zwischen Entladeschaltzustand und Warteschaltzustand mit einer Schaltfrequenz (f), die so gewählt ist, dass ein zeitlich gemittelter Ist-Entladestrom dem Soll-Entladestrom (I_{Soll}) entspricht.

13. Akkumulator-Tiefentladevorrichtung (10) nach einem der vorstehenden Ansprüche, **gekennzeichnet durch**
eine Eingabevorrichtung (36) zum Eingeben des Soll-Entladestroms (I_{Soll}) und/oder des Batteriezustandsparameters (Pⱼ) für
(a) zumindest einen Akku-Anschluss (14) und/oder
(b) eine Gruppe von Akku-Anschlüssen.

14. Akkumulator-Tiefentladevorrichtung (10) nach einem der vorstehenden Ansprüche, **dadurch gekennzeichnet, dass** die Entladeschaltung ausgebildet ist zum automatischen Durchführen eines Verfahrens mit den Schritten
(a) Erfassen einer Soll-Leistungsabgabe der Akkumulator-Tiefentladevorrichtung (10) und
(b) wenn eine Ist-Leistungsabgabe größer ist als die Soll-Leistungsabgabe, Erhöhen des Warteschaltzustandszeitanteils für zumindest einen Akku-Anschluss (14).

15. **Verfahren** zum Tiefentladen von Akkumulatoren (12), mit den Schritten
(i) Anschließen eines Akkumulators (12) an einen Akku-Anschluss (14) einer Akkumulator-Entladevorrichtung nach einem der vorstehenden Ansprüche und
(ii) Entladen des Akkumulators (12) und Unterbrechen der Entladung des Akkumulators (12), wobei zwischen dem Entladen und dem Nicht-Entladen zumindest zeitweise mit einer Schaltfrequenz (f) von zumindest 1 Kilohertz gewechselt wird
